Europäisches Patentamt

(19) European Patent Office

Office européen des brevets

(11) Numéro de publication: **0 148 124**
**A2**

(12) # DEMANDE DE BREVET EUROPEEN

(21) Numéro de dépôt: **84810624.1**

(22) Date de dépôt: **17.12.84**

(51) Int. Cl.⁴: **G 01 G 19/52**
**G 01 G 19/56**

(30) Priorité: **21.12.83 CH 6828/83**

(43) Date de publication de la demande:
**10.07.85 Bulletin 85/28**

(84) Etats contractants désignés:
**AT BE CH DE FR GB IT LI LU NL SE**

(71) Demandeur: **S.c.a.i.m.e.**
**B.P. 501**
**F-74105 Annemasse Cedex(FR)**

(72) Inventeur: **Mairot, Guy**
**Chemin de la Ruaz Vetraz Monthoux**
**F-74100 Annemasse(FR)**

(72) Inventeur: **Aumard, Jean Pierre**
**5 place du Jumelage**
**F-74100 Annemasse(FR)**

(74) Mandataire: **Vuille, Roman et al,**
**c/o KIRKER & Cie S.A. 14, rue du Mont-Blanc Case Postale**
**872**
**CH-1211 Genève 1(CH)**

(54) Dispositif de pesée pour four à micro-ondes.

(57) Le dispositif (1) permet la pesée d'un plat (2) avec des aliments (3) posé dans le four (11). Le plat se trouve sur un plateau de pesée (4) perméable aux micro-ondes et formant plaque de sole. Le plateau de pesée (4) repose sur un support de pesée (5), partiellement perméable aux micro-ondes; ce support comporte un mécanisme de pesée avec un capteur de force fournissant un signal électrique représentatif du poids du plat pesé. Un circuit du dispositif convertit le signal électrique du capteur en un signal exploitable dans un circuit électrique de commande du four (11). De préférence, un sélecteur du genre d'aliment (7) fait partie du circuit du dispositif.

FIG.1

# Dispositif de pesée
## pour four à micro-ondes

La présente invention se rapporte à un dispositif de pesée pour four à micro-ondes et à un four à micro-ondes incorporant un tel dispositif de pesée afin de régler la cuisson des aliments dans le four.

Le four à micro-ondes est un appareil électro-domestique fort répandu. Pour régler la cuisson des aliments qui lui sont confiés, il est généralement pourvu de sélecteurs pour régler l'intensité du rayonnement de micro-ondes et la durée de cuisson. Des tableaux détaillés et volumineux renseignent l'usager sur les positions appropriées des sélecteurs garantissant une cuisson réussie.

Le but de la présente invention est de simplifier la commande d'un four à micro-ondes pour l'usager. Dans ce but, l'objet de l'invention est de compléter le four à micro-ondes par un dispositif de pesée tel qu'il est défini par la revendication 1. Le four à micro-ondes incorporant le dispositif de pesée selon l'invention est défini dans la revendication 9. Divers perfectionnements sont décrits dans les revendications dépendantes.

Pour mieux faire comprendre l'invention, certaines formes d'exécution vont être décrites à titre d'exemple et en se référant aux figures.

La figure 1 représente un dispositif de pesée dans un four à micro-ondes;

la figure 2 donne un schéma de principe des liaisons entre le circuit du dispositif de pesée, le dispositif de commande du four et les dispositifs les plus marquants qu'ils contiennent.

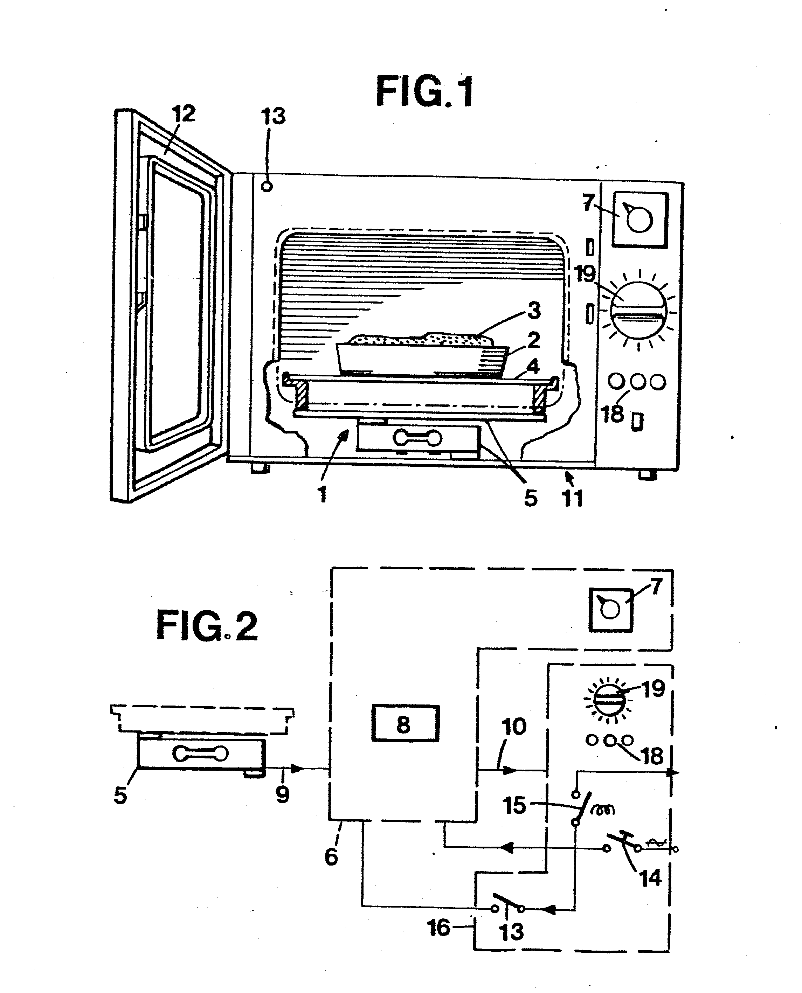

A la fig. 1, on voit un four à micro-ondes 11 avec sa porte 12 ouverte. Le plat 2 contenant les aliments 3 à cuire est posé dans le four et repose sur un plateau de pesée 4 perméable aux micro-ondes et formant plaque de sole. Un support 5 soutient le plateau de pesée 4 et est également perméable aux micro-ondes, là il se trouve dans le champ des micro-ondes.

Le support 5 comporte un mécanisme de pesée comprenant un capteur de force délivrant un signal électrique correspondant au poids du plat posé sur le plateau.

A la fig. 2, on voit que le signal électrique délivré par le capteur du support 5 est 'fourni' par la liaison 9 au circuit 6 du dispositif de pesée 1. Le dispositif de pesée 1 comprend les éléments directement liés à la pesée tels que le plateau de pesée 4, son support 5, ainsi que le circuit 6.

Le circuit 6 convertit le signal électrique du capteur en un signal exploitable dans un circuit électrique de commande 16 du four 11. Il comprend un sélecteur 7 que l'usager actionne selon le genre d'aliments à cuire. Les informations du genre d'aliment et du poids sont combinées dans le circuit 6, éventuellement à l'aide d'un micro-processeur 8, pour établir un signal transmis par la ligne 10 au circuit de commande 16 du four; ce signal est fourni sous une forme exploitable dans le circuit de commande 16. Le circuit de commande 16 comprend deux sélecteurs, l'un 18 pour le réglage de l'intensité du rayonnement des micro-ondes, l'autre 19 pour le réglage de la minuterie déterminant le temps de cuisson. Lorsque le four à micro-ondes fonctionne sans le dispositif de pesée, l'usager doit régler ces deux sélecteurs selon le genre et le poids des aliments à cuire. Avec le dispositif de pesée selon l'invention, un signal représentatif est établi dans le circuit 6 du dispositif 1, et ce signal est exploitable dans le circuit de commande 16. L'exploitation de ce signal peut se faire en supprimant complètement l'action d'un ou des deux sélecteurs 18 et 19, ou bien en combinant les instructions de ces sélecteurs 18 et 19 avec celles du signal venant du circuit 6.

Le circuit de commande 16 du four comprend toutes les composantes nécessaires à la commande, comme par exemple l'interrupteur principal de réseau 14, le relais au circuit 15 d'enclenchement et de déclenchement des micro-ondes.

Afin que les instructions de cuisson élaborées dans le circuit 6 et contenues dans le signal exploitable transmis

0148124

au circuit de commande 16 soient plus précises, on peut tenir compte du poids du plat 2 indépendamment des aliments. Dans ce but, le dispositif de pesée procède à deux pesées, la première pesée étant celle du plat vide; elle se fait par exemple automatiquement lorsque la porte 12 est ouverte, ce qui est indiqué au circuit 6 du dispositif de pesée 1 grâce au contact de porte 13. Puis les aliments sont mis dans le plat et le sélecteur de genre d'aliments est actionné par l'usager. L'usager enfin referme la porte 12 du four 11. Le contact de porte 13 signale cette fermeture au circuit 6, qui procède alors à la seconde pesée, celle du plat 2 avec les aliments 3.

Les signaux venant du capteur du support 5, les signaux traités dans le circuit 6 et dans le circuit 16 peuvent être soit analogiques, soit digitaux, soit en partie analogiques et en partie digitaux. L'homme du métier choisira les solutions en fonction des composants disponibles et des combinaisons qu'il veut obtenir dans le cadre des interactions décrites ci-dessus.

On peut également prévoir dans le circuit de commande 16 un affichage des instructions de réglage fournies par le circuit 6 du dispositif. Si on ne veut pas que ces instructions soient exécutées telles quelles par la commande du four, on peut laisser à l'usager la possibilité d'introduire des instructions partiellement modifiées à l'aide des sélecteurs 18 et 19.

Revendications

1. Dispositif de pesée (1) pour four à micro-ondes (11) permettant la pesée d'un plat (2) avec des aliments (3) dans le four caractérisé en ce qu'il comprend

- un plateau de pesée (4) perméable aux micro-ondes formant plaque de sole pour le plat;

- un support de plateau (5) partiellement perméable aux micro-ondes et comportant un mécanisme de pesée comprenant un capteur de force délivrant un signal électrique représentatif du poids du plat pesé;

- un circuit (6) convertissant le signal électrique du capteur en un signal exploitable dans un circuit électrique de commande (16) du four (11).

2. Dispositif selon la revendication 1, caractérisé en ce que son circuit (6) comprend un sélecteur du genre d'aliment (7) manoeuvrable par l'usager.

3. Dispositif selon la revendication 1 ou 2, caractérisé en ce que son circuit (6) peut mettre en mémoire les valeurs de pesées successives du plat vide et du plat plein et combiner ces valeurs pour déterminer et fournir le signal exploitable dans le circuit électrique de commande du four.

4. Dispositif selon la revendication 3, caractérisé en ce que le circuit (6) met en mémoire la valeur de pesée du plat vide (2) lorsque la porte (12) du four (11) est ouverte et, à la fermeture de la porte, il met en mémoire la valeur de pesée du plat plein (2 + 3).

5. Dispositif selon l'une des revendications 1 à 4, caractérisé en ce que le mécanisme de pesée comprend des jauges de contrainte.

6. Dispositif selon l'une des revendications 1 à 5, caractérisé en ce que son circuit (16) reçoit, transforme et délivre des signaux analogiques.

7. Dispositif selon l'une des revendications 1 à 5, caractérisé en ce que son circuit (16) est au moins partiellement digital.

8. Dispositif selon la revendication 7, caractérisé en ce que son circuit (16) comprend un microprocesseur.

9. Four à micro-ondes (11) avec un dispositif de pesée (1) incorporé selon l'une des revendications 1 à 8, le four à micro-ondes comprenant un circuit de commande (16) avec un sélecteur de réglage de puissance (18) permettant de varier l'intensité des micro-ondes et un sélecteur de réglage d'une minuterie (19) permettant de varier la durée de cuisson, caractérisé en ce que le circuit de commande (16) du four (11) est agencé pour permettre qu'au moins un des deux réglages mentionnés soit commandé par le signal exploitable venant du circuit du dispositif de pesée, soit en combinaison avec le sélecteur de réglage respectif, soit en supprimant complètement l'action du sélecteur de réglage respectif.

10. Four selon la revendication 9, caractérisé en ce que le circuit électrique de commande (16) du four (11) établit un signal indiquant si la porte (12) du four est ouverte ou fermée et fournit ce signal au circuit du dispositif de pesée (6).

0148124

# FIG.1

# FIG.2